# EUROPEAN PATENT APPLICATION

(11) **EP 2 085 584 A1**
(43) Date of publication of application: **05.08.2009**
(21) Application number: 07832224.5
(22) Date of filing: 21.11.2007
(51) Int. Cl.: F01P 3/20, B60H 1/08, F28D 20/00

(54) **HEAT STORAGE SYSTEM FOR VEHICLE**

(30) Priority: 21.11.2006 JP 2006313801
(71) Applicant: Calsonic Kansei Corporation, Saitama 331-0823 (JP)
(72) Inventor: HIYAMA, Jinichi, Saitama-shi, Saitama 331-8501 (JP)
(74) Representative: Ilgart, Jean-Christophe
(86) International application number: PCT/JP2007/072494
(87) International publication number: WO 2008/062810

(57) **Abstract**

In a heat storage system for a vehicle including a heat accumulator S, in which engine coolant is stored and allowed to flow, in an engine coolant circulation circuit connecting an engine ENG and a heater core 30 of an air conditioning unit, the heat accumulator S is provided with an oil storage layer 5, in which transmission oil serving as a heat medium different from the engine coolant is stored and allowed to flow, between a hot water storage layer 1 and a side-surface vacuum heat-insulation layer 5.

## Description

### TECHNICAL FIELD

The present invention relates to a heat storage system for a vehicle to be employed in an engine coolant circulation circuit in order to facilitate an engine warm-up or improve heating capability (quick warm-up performance).

### BACKGROUND ART

Conventionally, a heat storage system for a vehicle storing engine coolant while retaining heat has been known that employs a heat accumulator which has a double structure of an inner container and an outer container made of metal and in which a gap portion between the two containers is vacuum heat-insulated (for example, see Japanese Patent Application Publication No. 2004-20027).

In the conventional heat storage system for a vehicle, the engine coolant which has become high in temperature during driving of a vehicle is taken into the heat accumulator, and the high-temperature engine coolant is stored while retaining heat in the heat accumulator while the vehicle is stopped. Then, at the next start of an engine, the high-temperature engine coolant in the heat accumulator is sent to the engine or a heater core for interior heating so as to be used for an early warm-up of the engine or an early heating.

### DISCLOSURE OF THE INVENTION

### Problem to be Solved by the Invention

However, since the conventional heat storage system for a vehicle has a configuration in which only heat energy stored in the engine coolant is used as a heat source for the early warm-up or the early heating, there has been a problem that a temperature necessary for an engine warm-up or the interior heating at the start of the engine may not be reached due to an engine coolant temperature not increasing when a heating value of the engine is small and the engine coolant temperature decreasing after being left for a time.

For example, since the engine heating value tends to gradually decrease due to an increase in engine efficiency in recent years, heat energy storable in the heat accumulator may be insufficient. Thus, hot water stored in the heat accumulator decreases in temperature by the influence of external temperature or the like when left for a long period of time after the engine has been stopped, whereby an expected early warm-up performance of the engine or early interior heating performance cannot be obtained at the start of the engine.

Also, hybrid vehicles having an engine and a motor generator mounted thereon as driving sources tend to gradually spread due to advantages in fuel efficiency performance and environmental performance. In the hybrid vehicle, a driving mode (electric car mode) in which the engine is stopped and only the motor generator is used as the driving source is selected in a driving situation where a battery capacity is high or the like. When a driving frequency in the electric car mode is high, the temperature of engine coolant does not increase due to the engine being stopped. Thus, the early warm-up performance and the early heating performance obviously cannot be obtained at the start of the engine, and also a stable heating performance in a regular region of normal driving cannot be ensured in a situation where the high-temperature engine coolant cannot be supplied to a heater core of an air conditioning unit to make interior heating ineffective during driving with a heater in use in winter or the like.

The present invention has been made in view of the problem, and has an object of providing a heat storage system for a vehicle which can achieve an improvement in early warm-up performance and early interior heating performance at the start of an engine and an improvement in heating performance in a regular region by ensuring high-temperature engine coolant without depending on the amount of an engine heating value.

### Means for Solving the Problem

In order to achieve the object, the present invention provides a heat storage system for a vehicle comprising a heat accumulator, in which engine coolant is stored and allowed to flow, in an engine coolant circulation circuit connecting an engine and a heater core of an air conditioning unit, the system **characterized in that** the heat accumulator is provided with a heat medium storage layer, in which a heat medium different from the engine coolant is stored and allowed to flow, between a hot water storage layer and a heat insulation layer.

### Effects of the Invention

Thus, in the heat storage system for a vehicle of the present invention, the heat accumulator is configured in such a way that the heat medium storage layer in which the heat medium different from the engine coolant (hereinafter called "different medium") is stored and allowed to flow is sandwiched between the hot water storage layer and the heat insulation layer. Therefore, a heat exchange between the engine coolant of the hot water storage layer and the different medium of the heat medium storage layer can be performed with high efficiency while suppressing heat release from the different medium between the heat medium storage layer and the heat insulation layer. Accordingly, when the temperature of the engine coolant is low, heat energy possessed by the different medium of the heat medium storage layer is provided to the engine coolant stored or flowing in the hot water storage layer, thereby increasing the temperature of the engine coolant. That is, by adding as a heat source the heat medium different from the engine coolant, the high-temperature engine coolant can be ensured without depending on the amount of the engine heating value. Thus, since the high-temperature engine coolant can be stored in the hot water storage layer of the heat accumulator while suppressing a temperature decrease with the heat insulation layer when the engine is stopped, an early interior heated state can be obtained by supplying the high-temperature engine coolant from the heat accumulator to the heater core and an early engine warm-up state can be obtained by supplying the high-temperature engine coolant from the heat accumulator to the engine, even if the engine is started a predetermined period of time after the engine has been stopped. Also, when the engine heating value is small or there is no engine heating value during driving with a heater in use, a decrease in heating performance in a regular region is prevented by adding the heat energy of different medium to the engine coolant, maintaining the engine coolant at a high temperature, and supplying the high-temperature engine coolant from the heat accumulator to the heater core. As a result, by ensuring the high-temperature engine coolant without depending on the amount of the engine heating value, an improvement in the early warm-up performance and the early interior heating performance at the start of the engine and an improvement in the heating performance in the regular region can be achieved.

### BRIEF DESCRIPTION OF THE DRAWINGS

[FIG. 1A] FIG. 1A is an overall perspective view of a heat storage system for a vehicle (one example of the heat storage system for a vehicle) of Embodiment 1 employed in a hybrid vehicle.
[FIG. 1B] FIG. 1B shows an enlarged perspective view of a portion A of a double pipe of FIG. 1A.
[FIG. 2] FIG. 2 is a vertical-section front view showing a stacked-type heat accumulator S used in the heat storage system for a vehicle of Embodiment 1.
[FIG. 3] Fig. 3 is an enlarged view of a portion B of FIG. 2 showing the stacked-type heat accumulator S used in the heat storage system for a vehicle of Embodiment 1.
[FIG. 4] FIG. 4 is an external perspective view showing the stacked-type heat accumulator S used in the heat storage system for a vehicle of Embodiment 1.
[FIG. 5] FIG. 5 is a sectional perspective view showing the stacked-type heat accumulator S used in the heat storage system for a vehicle of Embodiment 1.
[FIG. 6] FIG. 6 is an illustrative view of a heat storage operation during driving with a heater in use in the heat storage system for a vehicle of Embodiment 1.
[FIG. 7] FIG. 7 is an illustrative view of the heat storage operation during driving with the heater not in use in the heat storage system for a vehicle of Embodiment 1.
[FIG. 8] FIG. 8 is an illustrative view of the heat storage maintaining operation when an engine is stopped in the heat storage system for a vehicle of Embodiment 1.
[FIG. 9] FIG. 9 is an illustrative view of a heating/warm-up operation immediately after the start of the engine with the heater in use in the heat storage system for a vehicle of Embodiment 1.

### Explanation of Reference Numerals

- ENG: Engine
- EC: Engine clutch
- M/G: Motor generator
- A/T: Automatic transmission (transmission)
- VU: Valve unit
- S: Heat accumulator
- 1: Hot water storage layer
- 2: Side-surface vacuum heat-insulation layer (heat insulation layer or vacuum heat-insulation layer)
- 3: Inlet-side end surface vacuum heat-insulation layer
- 4: Outlet-side end surface vacuum heat-insulation layer
- 5: Oil storage layer (heat medium storage layer)
- 6: Inlet pipe
- 7: Outlet pipe
- 15: Inlet-side end plate
- 16: Inlet-side lid plate
- 17: Outlet-side end plate
- 18: Outlet-side lid plate
- 19: Tank component
- 19c: Third separating wall section
- 19d: Inner rib
- 30: Heater core
- 31: Engine coolant introduction pipe
- 32: Hot water supply pipe
- 33: Hot water return pipe
- 34: Oil introduction pipe
- 35: Oil return pipe
- 36: Connector
- 37: Double pipe
- 38: Hot water inlet valve
- 39: Hot water outlet valve
- 40: Oil inlet valve (heat medium inlet valve)
- 41: Oil outlet valve (heat medium outlet valve)

### BEST MODE FOR CARRYING OUT THE INVENTION

Hereinafter, a best mode for achieving a heat storage system for a vehicle of the present invention will be described based on Embodiment 1 shown in the drawings.

### EMBODIMENT 1

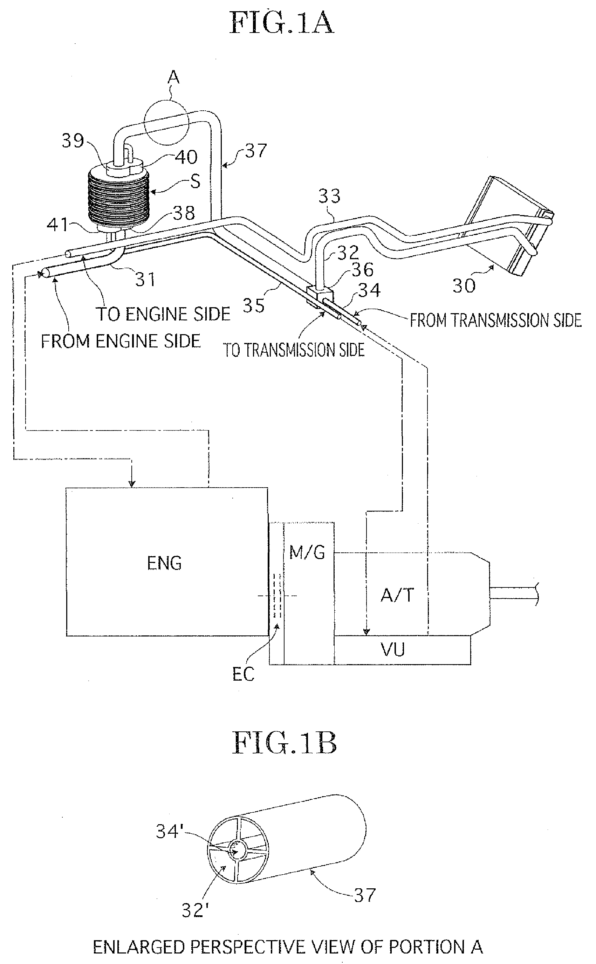

First, a system configuration will be described. FIG. 1A is an overall perspective view of a heat storage system for a vehicle (one example of the heat storage system for a vehicle) of Embodiment 1 employed in a hybrid vehicle. FIG. 1B shows an enlarged perspective view of a portion A of a double pipe of FIG. 1A.

The heat storage system for a vehicle of Embodiment 1 includes, as shown in FIG. 1A, an engine ENG, an engine clutch EC, a motor generator M/G, an automatic transmission A/T (transmission), a valve unit VU, a heat accumulator S, a heater core 30, an engine coolant introduction pipe 31, a hot water supply pipe 32, a hot water return pipe 33, an oil introduction pipe 34, an oil return pipe 35, a connector 36, a double pipe 37, a hot water inlet valve 38, a hot water outlet valve 39, an oil inlet valve 40 (heat medium inlet valve), and an oil outlet valve 41 (heat medium outlet valve).

The hybrid vehicle employing the heat storage system for a vehicle of Embodiment 1 includes the engine ENG and the motor generator M/G as driving sources. An output shaft of the engine ENG and an input shaft of the motor generator M/G are connected via the engine clutch EC.

To an output shaft of the motor generator M/G, the automatic transmission A/T is connected which automatically changes a gear ratio in steps or steplessly in accordance with driving force request information, car speed information, or the like. The automatic transmission A/T operates a transmission component by hydraulic control, and has the valve unit VU attached to a transmission case which houses a gear train and the like, the valve unit VU housing hydraulic control valves.

The hybrid vehicle has driving modes of: a hybrid car mode in which the engine clutch EC is engaged to drive with the engine ENG and the motor generator M/G used as the driving sources; and an electric car mode in which the engine clutch EC is released to stop the engine ENG and drive with only the motor generator M/G used as the driving source. Since the hydraulic control with respect to the transmission component is executed in the valve unit VU during driving with either one of the driving modes being selected, transmission oil (hereinafter simply called "oil") serving as hydraulic oil is maintained in a high-temperature state. Thus, in Embodiment 1, the oil of the valve unit VU is used as a heat medium different from engine coolant in the heat storage system for a vehicle.

As a basic configuration, the heat storage system for a vehicle includes the heat accumulator S, in which the engine coolant is stored and allowed to flow, in an engine coolant circulation circuit connecting the engine ENG and the heater core 30 of an air conditioning unit not shown in the drawing.

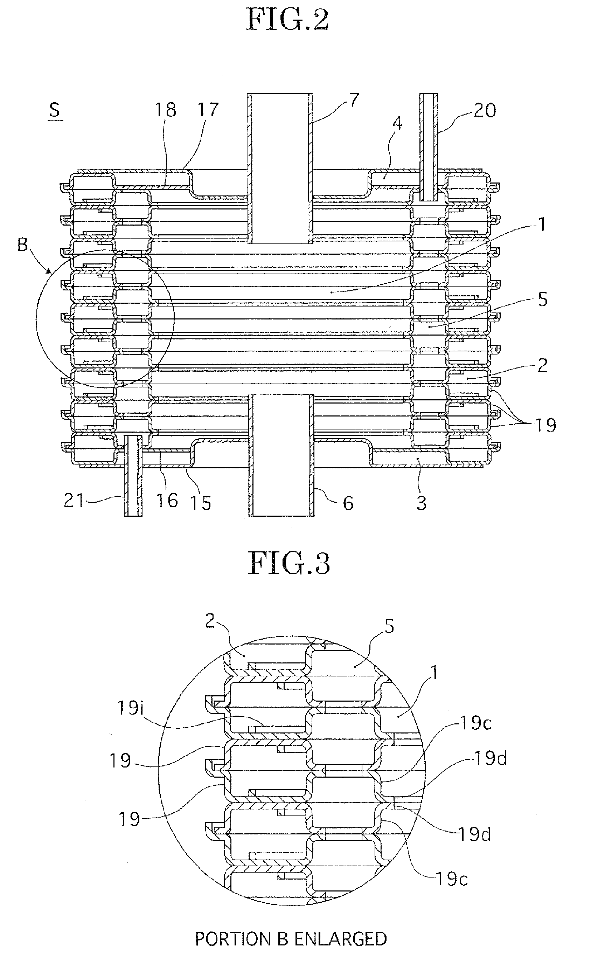

The engine coolant circulation circuit includes the engine coolant introduction pipe 31 connecting the engine ENG and a hot water inlet pipe 6 (see FIG. 2) of the heat accumulator S, the hot water supply pipe 32 connecting a hot water outlet pipe 7 (see FIG. 2) of the heat accumulator S and an inlet pipe of the heater core 30, and the hot water return pipe 33 connecting an outlet pipe of the heater core 30 and the engine ENG.

An oil circulation circuit for introducing/returning the oil to/from the heat accumulator S includes the oil introduction pipe 34 connecting the valve unit VU and an oil inlet pipe 20 (see FIG. 2) of the heat accumulator S and the oil return pipe 35 connecting an oil outlet pipe 21 (see FIG. 2) of the heat accumulator S and the valve unit VU.

The connector 36 is provided in a position on the hot water supply pipe 32. As a pipe between the connector 36 and the hot water outlet pipe 7 and the oil inlet pipe 20 of the heat accumulator S, the double pipe 37 formed of an inner pipe and an outer pipe as shown in FIG. 1B is set instead of independently arranging the hot water supply pipe 32 and the oil introduction pipe 34.

In a configuration formed of the inner pipe and the outer pipe of the double pipe 37, a flow path encompassed by the inner pipe is set as an oil introduction flow path 34' (heat medium introduction flow path) connected with the oil introduction pipe 34, and a flow path which is encompassed by the inner pipe and the outer pipe and divided into four is set as a hot water supply flow path 32' connected with the hot water supply pipe 32. The hot water flows in the hot water supply flow path 32' from the near side toward the far side in FIG. 1B, whereas the oil flows in the oil introduction flow path 34' from the far side toward the near side in FIG. 1B in an opposite direction to that of the hot water. Thus, a heat exchange is performed efficiently between the oil introduction flow path 34' and the hot water supply flow path 32'.

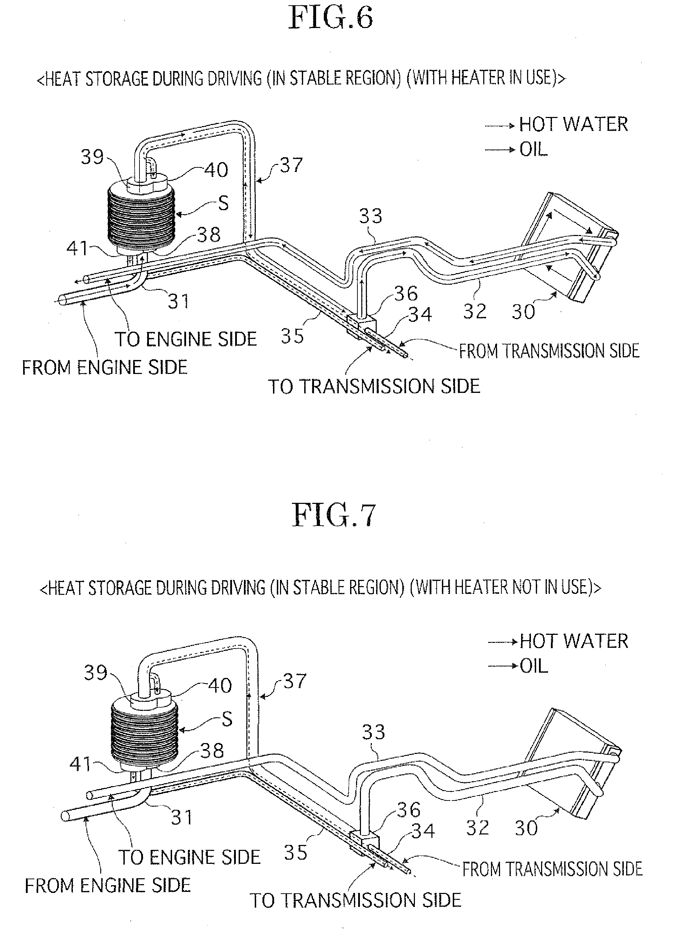

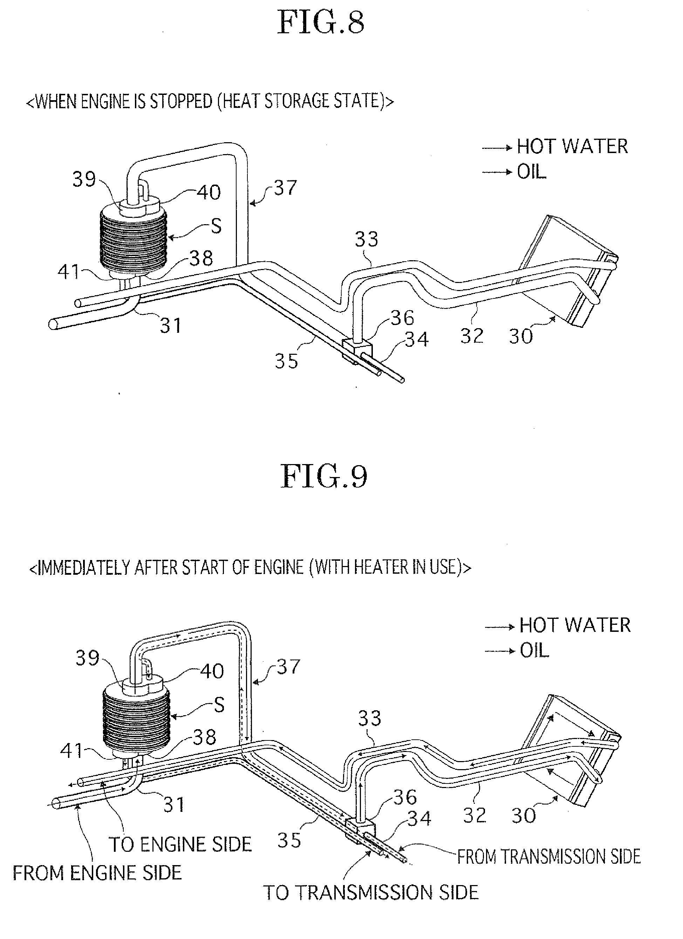

The hot water inlet valve 38 and the hot water outlet valve 39 are respectively provided to the hot water inlet pipe 6 and the hot water outlet pipe 7 communicating with a hot water storage layer 1 of the heat accumulator S, and the oil inlet valve 40 and the oil outlet valve 41 are respectively provided to the oil inlet pipe 20 and the oil outlet pipe 21 communicating with an oil storage layer 5 of the heat accumulator S. By a valve controller not shown in the drawing, control is performed in such a manner that the oil inlet valve 40 and the oil outlet valve 41 (see FIGS. 6 and 7) are opened during heat storage regardless of whether or not a heater is in use, that the hot water inlet valve 38, the hot water outlet valve 39, the oil inlet valve 40, and the oil outlet valve 41 (see FIG. 8) are closed in a heat storage state when the engine is stopped, and that the hot water inlet valve 38, the hot water outlet valve 39, the oil inlet valve 40, and the oil outlet valve 41 (see FIG. 9) are opened when the heater is in use immediately after the start of the engine.

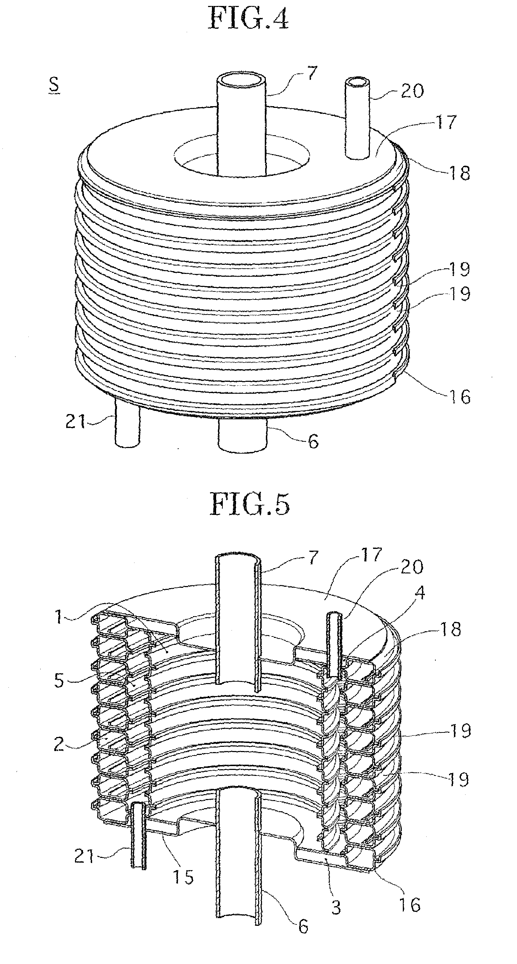

Next, the configuration of the heat accumulator S will be described. FIG. 2 is a vertical-section front view showing the stacked-type heat accumulator S used in the heat storage system for a vehicle of Embodiment 1. FIG. 3 is an enlarged view of a portion B of FIG. 2 showing the stacked-type heat accumulator S used in the heat storage system for a vehicle of Embodiment 1. FIG. 4 is an external perspective view showing the stacked-type heat accumulator S used in the heat storage system for a vehicle of Embodiment 1. FIG. 5 is a sectional perspective view showing the stacked-type heat accumulator S used in the heat storage system for a vehicle of Embodiment 1.

The stacked-type heat accumulator S used in the heat storage system for a vehicle of Embodiment 1 includes, as shown in FIGS. 2 to 5, the hot water storage layer 1, a side-surface vacuum heat-insulation layer 2 (heat insulation layer or vacuum heat-insulation layer), an inlet-side end surface vacuum heat-insulation layer 3, an outlet-side end surface vacuum heat-insulation layer 4, the oil storage layer 5 (heat medium storage layer), the hot water inlet pipe 6, the hot water outlet pipe 7, an inlet-side end plate 15, an inlet-side lid plate 16, an outlet-side end plate 17, an outlet-side lid plate 18, a tank component 19, the oil inlet pipe 20, and the oil outlet pipe 21.

The heat accumulator S includes the vacuum heat-insulation layers 2, 3, and 4 in an outer circumference section of the hot water storage layer 1, and is provided with the oil storage layer 5, in which the oil (the heat medium different from the engine coolant) of the automatic transmission A/T is stored and allowed to flow, between the hot water storage layer 1 and the side-surface vacuum heat-insulation layer 2.

The heat accumulator S is a stacked type in which the hot water storage layer 1, the oil storage layer 5, and the vacuum heat-insulation layers 2, 3, and 4 are formed by stacking the multiple tank components 19 in reverse positions with each other and closing both end opening portions of the stacked tank components 19 with the inlet-side end plate 15, the inlet-side lid plate 16, the outlet-side end plate 17, and the outlet-side lid plate 18. Note that, as a method of manufacturing the stacked-type heat accumulator S, a vacuum brazing method is employed in which the respective component parts applied with a brazing material are stacked and assembled into a container shape and then heated in a vacuum atmosphere so that the component parts can be brazed. That is, the vacuum heat-insulation layers 2, 3, and 4 are ensured in advance at the point of assembly without adding an air bleeding step after the container is manufactured. Thus, the air bleeding step is omitted.

The hot water storage layer 1 is formed of inside center spaces which are made continuous by stacking the tank components 19. The hot water storage layer 1 is provided with the hot water inlet pipe 6 which causes the engine coolant to flow in and the hot water outlet pipe 7 which causes the heated engine coolant to flow out. In a wall partitioning the hot water storage layer 1 and the oil storage layer 5, indents perpendicular to the flow of the engine coolant from an inlet to an outlet are formed by stacking the tank component 19. The indent is formed by overlapping a third separating wall section 19c and inner ribs 19d, 19d adjacent to each other, as shown in FIG. 3.

The side-surface vacuum heat-insulation layer 2 is formed by vacuumizing outermost circumference spaces which are made continuous by stacking the tank components 19. The inlet-side end surface vacuum heat-insulation layer 3 is formed by vacuumizing a space formed by the inlet-side end plate 15 and the inlet-side lid plate 16. The outlet-side end surface vacuum heat-insulation layer 4 is formed by vacuumizing a space formed by the outlet-side end plate 17 and the outlet-side lid plate 18. Note that reference numeral 19i in FIG. 3 denotes a positioning protrusion of the tank component 19 which is seen as a sectional surface of the side-surface vacuum heat-insulation layer 2.

The oil storage layer 5 is formed of an annular space sandwiched by the inside center space serving as the hot water storage layer 1 and the outermost circumference space serving as the side-surface vacuum heat-insulation layer 2, among the spaces made continuous by stacking the tank components 19. The oil storage layer 5 is provided with the oil inlet pipe 20 which causes the oil to flow in and the oil outlet pipe 21 which causes the oil to flow out. Note that a positional relation of the inlet and outlet of the oil inlet pipe 20 and the oil outlet pipe 21 is set to be opposite to a positional relation of the inlet and outlet of the hot water inlet pipe 6 and the hot water outlet pipe 7.

Next, operations will be described.

### [Heat storage operation]

In the heat storage system for a vehicle of Embodiment 1, the heat accumulator S is configured in such a way that the oil storage layer 5, in which the oil as the heat medium different from the engine coolant is stored and allowed to flow, is sandwiched between the hot water storage layer 1 and the side-surface vacuum heat-insulation layer 2. Therefore, the heat exchange between the engine coolant of the hot water storage layer 1 and the oil of the oil storage layer 5 can be performed with high efficiency while suppressing heat release from the oil between the oil storage layer 5 and the side-surface vacuum heat-insulation layer 2.

Thus, when the temperature of the engine coolant is low, heat energy possessed by the oil of the oil storage layer 5 is provided to the engine coolant stored or flowing in the hot water storage layer 1, thereby increasing the temperature of the engine coolant. That is, by adding as a heat source the oil serving as the heat medium different from the engine coolant, the high-temperature engine coolant can be ensured without depending on the amount of an engine heating value.

Thus, since the high-temperature engine coolant can be stored in the hot water storage layer 1 of the heat accumulator S while suppressing a temperature decrease with the side-surface vacuum heat-insulation layer 2 when the engine ENG is stopped, an early interior heated state can be obtained by supplying the high-temperature engine coolant from the heat accumulator S to the heater core 30 and an early engine warm-up state can be obtained by supplying the high-temperature engine-coolant from the heat accumulator S to the engine ENG, even if the engine is started a predetermined period of time after the engine has been stopped.

Also, when the engine heating value is small or there is no engine heating value during driving with the heater in use, a decrease in heating performance in a regular region is prevented by adding the heat energy of oil to the engine coolant, maintaining the engine coolant at a high temperature, and supplying the high-temperature engine coolant from the heat accumulator S to the heater core 3 0.

Hereinafter, as one example of the operations of the heat storage system, a "heat storage operation during driving with heater in use," a "heat storage operation during driving with heater not in use," a "heat storage maintaining operation when engine is stopped," and a "heating/warm-np operation immediately after start of engine with heater in use" will be described based on FIGS. 6 to 9.

### [Heat storage operation during driving with heater in use]

At the time of heat storage during driving (in a stable region) with the heater in use, the hot water inlet valve 38, the hot water outlet valve 39, the oil inlet valve 40, and the oil outlet valve 41 are opened.

At this time, as shown in FIG. 6, the engine coolant from the engine ENG is supplied to an inlet of the heater core 30 via the engine coolant introduction pipe 31, the hot water inlet pipe 6, the hot water storage layer 1 of the heat accumulator S, the hot water outlet pipe 7, the hot water supply flow path 32' of the double pipe 37, and the hot water supply pipe 32 in this order. Then, the engine coolant provides heat to surrounding air during a meandering movement through a pipe in the heater core 30 so as to perform the interior heating. Then, the engine coolant which has reached an outlet of the heater core 30 is returned to the engine ENG via the hot water return pipe 33, as shown in FIG. 6.

Meanwhile, as shown in FIG. 6, the oil from the valve unit VU is supplied to the oil storage layer 5 of the heat accumulator S via the oil introduction pipe 34, the oil introduction flow path 34' of the double pipe 37, and the oil inlet pipe 20 in this order. The oil provides heat to the engine coolant flowing in the hot water supply flow path 32' of the double pipe 37 while moving in the oil introduction flow path 34' of the double pipe 37, and provides heat to the engine coolant flowing in the hot water storage layer 1 of the heat accumulator S while moving in the oil storage layer 5 of the heat accumulator S. Then, the oil which has reached the oil outlet pipe 21 of the heat accumulator S is returned to the valve unit VU via the oil return pipe 35, as shown in FIG. 6.

Thus, when the engine coolant temperature is lower than an oil temperature during driving with the heater in use, a double-pipe heat-exchange operation of providing heat from the oil flowing in the oil introduction flow path 34' of the double pipe 37 to the engine coolant flowing in the hot water supply flow path 32' of the double pipe 37, and a heat-accumulator heat-exchange operation of providing heat from the oil flowing in the oil storage layer 5 of the heat accumulator S to the engine coolant flowing in the hot water storage layer 1 are both performed. By these heat exchange operations, a hot water control of bringing the temperature of the flowing engine coolant to approximately the same temperature as the oil temperature is performed, thereby stably maintaining the temperature of the engine coolant to be supplied to the heater core 30 at a high temperature at an oil temperature level.

### [Heat storage operation during driving with heater not in use]

At the time of a heat storage during driving (in the stable region) with the heater not in use, the hot water inlet valve 38 and the hot water outlet valve 39 are closed, and the oil inlet valve 40 and the oil outlet valve 41 are opened.

At this time, the engine coolant from the engine ENG does not flow in a pipe path system as shown in FIG. 7, and the engine coolant is in a state of being stored in the hot water storage layer 1 of the heat accumulator S by the hot water inlet valve 38 and the hot water outlet valve 39 being closed.

Meanwhile, as shown in FIG. 7, the oil from the valve unit VU is supplied to the oil storage layer 5 of the heat accumulator S via the oil introduction pipe 34, the oil introduction flow path 34' of the double pipe 37, and the oil inlet pipe 20 in this order. The oil provides heat to the engine coolant remaining in the hot water supply flow path 32' of the double pipe 37 while moving in the oil introduction flow path 34' of the double pipe 37, and provides heat to the engine coolant remaining in the hot water storage layer 1 of the heat accumulator S while moving in the oil storage layer 5 of the heat accumulator S. Then, the oil which has reached the oil outlet pipe 21 of the heat accumulator S is returned to the valve unit VU via the oil return pipe 35, as shown in FIG. 7.

Thus, when the engine coolant temperature is lower than the oil temperature during driving with the heater not in use, a double-pipe heat-exchange operation of providing heat from the oil flowing in the oil introduction flow path 34' of the double pipe 37 to the engine coolant remaining in the hot water supply flow path 32' of the double pipe 37, and a heat-accumulator heat-exchange operation of providing heat from the oil flowing in the oil storage layer 5 of the heat accumulator S to the engine coolant remaining in the hot water storage layer 1 are both performed. By these heat exchange operations, a heat storage control of bringing the engine coolant temperature to approximately the same temperature as the oil temperature is performed, thereby stably maintaining the temperature of the engine coolant remaining in the hot water storage layer 1 of the heat accumulator S at a high temperature at the oil temperature level.

### [Heat storage maintaining operation when engine is stopped]

In the heat storage state when the engine is stopped, the hot water inlet valve 38, the hot water outlet valve 39, the oil inlet valve 40, and the oil outlet valve 41 are closed.

At this time, as shown in FIG. 8, the engine coolant from the engine ENG does not flow in the pipe path system, and the engine coolant is in the state of being stored in the hot water storage layer 1 of the heat accumulator S by the hot water inlet valve 38 and the hot water outlet valve 39 being closed.

Meanwhile, as shown in FIG. 8, the oil from the valve unit VU also does not flow in the pipe path system, and the oil is in a state of being stored in the oil storage layer 5 of the heat accumulator S by the oil inlet valve 40 and the oil outlet valve 41 being closed.

Thus, in either case where it is shifted from a driving state with the heater in use shown in FIG. 6 to an engine stopped state or where it is shifted from the driving state with the heater not in use shown in FIG. 7 to the engine stopped state, the temperature of the engine coolant remaining in the hot water storage layer 1 of the heat accumulator S is maintained at the high temperature at the oil temperature level when the engine is started to be stopped as described above. Therefore, due to a high effect of heat retention enabling minimization of the heat release from the engine coolant remaining in the hot water storage layer 1 by the oil storage layer 5 on the outer circumference of the hot water storage layer 1 and the side-surface vacuum heat-insulation layer 2 on the outermost circumference of the oil storage layer 5, the temperature of the engine coolant remaining in the hot water storage layer 1 of the heat accumulator S is maintained at the high temperature even after being left for a long period of time when a car is parked or stopped, for example.

### [Heating/warm-up operation immediately after start of engine with heater in use]

When the heater is in use immediately after the start of the engine, the hot water inlet valve 38, the hot water outlet valve 39, the oil inlet valve 40, and the oil outlet valve 41 are opened.

At this time, as shown in FIG. 9, the engine coolant from the engine ENG is supplied to the inlet of the heater core 30 via the engine coolant introduction pipe 31, the hot water inlet pipe 6, the hot water storage layer 1 of the heat accumulator S, the hot water outlet pipe 7, the hot water supply flow path 32' of the double pipe 37, and the hot water supply pipe 32 in this order. Then, the engine coolant which has reached the outlet of the heater core 30 is returned to the engine ENG via the hot water return pipe 33, as shown in FIG. 9.

Meanwhile, as shown in FIG. 9, the oil from the valve unit VU is supplied to the oil storage layer 5 of the heat accumulator S via the oil introduction pipe 34, the oil introduction flow path 34' of the double pipe 37, and the oil inlet pipe 20 in this order. Then, the oil which has reached the oil outlet pipe 21 of the heat accumulator S is returned to the valve unit VU via the oil return pipe 35, as shown in FIG. 9.

Thus, when the engine is started from the heat storage state when the engine is stopped shown in FIG. 8, the temperature of the engine coolant of the engine ENG is low immediately after the start of the engine. However, since the high-temperature engine coolant stored in the hot water storage layer 1 of the heat accumulator S is supplied to the inlet of the heater core 30, the engine coolant provides heat to the surrounding air during the meandering movement through the pipe in the heater core 30 so as to perform the interior heating (a quick heating operation). Since the temperature of the engine coolant merely decreases corresponding to the amount of the heat exchange and a high temperature state is maintained even when the engine coolant reaches the outlet of the heater core 30, the warm-up (a quick warm-up operation) of the engine ENG is performed by returning the engine coolant to the engine ENG via the hot water return pipe 33.

When a predetermined period of time has elapsed after the start of the engine, it enters the state shown in FIG. 6. Then, when the engine coolant temperature is lower than the oil temperature, the double-pipe heat-exchange operation of providing heat from the oil flowing in the oil introduction flow path 34' of the double pipe 37 to the engine coolant flowing in the hot water supply flow path 32' of the double pipe 37, and the heat-accumulator heat-exchange operation of providing heat from the oil flowing in the oil storage layer 5 of the heat accumulator S to the engine coolant flowing in the hot water storage layer 1 are both performed. By these heat exchange operations, the hot water control of bringing the temperature of the flowing engine coolant to approximately the same temperature as the oil temperature is performed, thereby stably maintaining the temperature of the engine coolant to be supplied to the heater core 30 at the high temperature at the oil temperature level and improving the heating performance in the regular region.

Next, effects will be described.
With the heat storage system for a vehicle of Embodiment 1, the following effects can be obtained.

(1) In the heat storage system for a vehicle including the heat accumulator S, in which the engine coolant is stored and allowed to flow, in the engine coolant circulation circuit connecting the engine ENG and the heater core 30 of the air conditioning unit, the heat accumulator S is provided with the heat medium storage layer, in which the heat medium different from the engine coolant is stored and allowed to flow, between the hot water storage layer 1 and the heat insulation layer. Therefore, by ensuring the high-temperature engine coolant without depending on the amount of the engine heating value, an improvement in the early warm-up performance or the early interior heating performance at the start of the engine and an improvement in the heating performance in the regular region can be achieved.

(2) The heat insulation layer is the side-surface vacuum heat-insulation layer 2, and the heat medium storage layer is the oil storage layer 5 in which the transmission oil used in the automatic transmission A/T is stored and allowed to flow, the transmission oil serving as the heat medium different from the engine coolant. Therefore, the high-temperature engine coolant can be ensured with a low-cost system by using the transmission oil which maintains the high-temperature state regardless of whether the engine ENG is operated or stopped, without adding a device for newly creating the heat medium.

(3) The heat accumulator S is the stacked-type heat accumulator S in which the hot water storage layer 1, the oil storage layer 5, and the side-surface vacuum heat-insulation layer 2 are formed by stacking the multiple tank components 19 and closing opening portions of the stacked tank components 19 with the inlet-side lid plate 15 and the outlet-side lid plate 17. Therefore, multiple heat accumulators differing in capacity do not need to be prepared as with a container-type heat accumulator, and heat storage capacity requests of hot water which are different depending on a car type, discharge amount, and the like can be met by setting different numbers of the tank components 19 to be stacked.

(4) The stacked-type heat accumulator S has the indent formed in the wall partitioning the hot water storage layer 1 and the oil storage layer 5 by stacking the tank components 19, the indent being perpendicular to the flow of the engine coolant from the inlet to the outlet. Therefore, compared to a case of a double-cylinder container structure, a heat exchange area between the engine coolant of the hot water storage layer 1 and the oil of the oil storage layer 5 increases, thus improving a heat exchange efficiency of the engine coolant and the oil.

(5) The oil introduction flow path 34' and an oil return flow path are connected to the oil storage layer 5 of the heat accumulator S, the paths introducing and returning the oil serving as the heat medium different from the engine coolant, and, the oil introduction flow path 34' is arranged along the hot water supply flow path 32' in the engine coolant circulation circuit so as to be capable of the heat exchange therebetween, the hot water supply flow path 32' supplying the hot water of the hot water storage layer 1 of the heat accumulator S to the inlet of the heater core 30, the oil introduction flow path 34' having the flow in the opposite direction to that of the hot water. Therefore, other than on the inside of the heat accumulator S, a region in which the hot water supply flow path 32' and the oil introduction flow path 34' are arranged along each other can be added as a heat exchange region. Thus, the heat exchange efficiency of the oil and the engine coolant can be improved compared to the heat exchange by the heat accumulator S alone.

(6) The hot water supply flow path 32' and the oil introduction flow path 34' are configured by the double pipe 37 formed of the inner pipe and the outer pipe. In the double pipe 37, the flow path encompassed by the inner pipe is the oil introduction flow path 34' and the flow path encompassed by the inner pipe and the outer pipe is the hot water supply flow path 32'. Therefore, when the engine coolant temperature is lower than the oil temperature, the engine coolant temperature can be increased by high heat exchange efficiency in effectively providing the heat energy possessed by the oil to the engine coolant.

(7) The hot water inlet valve 38 and the hot water outlet valve 39 are respectively provided to the hot water inlet pipe 6 and the hot water outlet pipe 7 communicating with the hot water storage layer 1 of the heat accumulator S, the oil inlet valve 40 and the oil outlet valve 41 are respectively provided to the oil inlet pipe 20 and the oil outlet pipe 21 communicating with the oil storage layer 5 of the heat accumulator S, and the valve controller is provided which opens the oil inlet valve 40 and the oil outlet valve 41 during the heat storage regardless of whether or not the heater is in use, which closes the hot water inlet valve 38, the hot water outlet valve 39, the oil inlet valve 40, and the oil outlet valve 41 in the heat storage state when the engine is stopped, and which opens the hot water inlet valve 39, the hot water outlet valve 39, the oil inlet valve 40, and the oil outlet valve 41 when the heater is in use immediately after the start of the engine. Therefore, the quick warm-up performance or the quick interior heating performance at the start of the engine can be achieved, and an improvement in the heating performance in the regular region can be achieved.

The heat storage system for a vehicle of the present invention has been described above based on Embodiment 1. However, specific configurations are not limited to Embodiment 1, and a change, addition, or the like in design is permitted without departing from the gist of the invention according to the appended claims.

In Embodiment 1, the example in which the transmission oil is used as the heat medium different from the engine coolant has been shown. However, it is not limited to the transmission oil. An alternative in-vehicle heat medium may be used, or a heat medium from a newly set heat source may be used.

In Embodiment 1, the example of the stacked-type heat accumulator as the heat accumulator has been shown. However, it may be a triple-container type heat accumulator such as that described in the conventional art, a combination of a container structure and a stacked structure, or the like.

In Embodiment 1, the example has been shown in which the hot water supply flow path and the oil introduction flow path are set by partitioning the double pipe formed of the inner pipe and the outer pipe to achieve the high heat exchange efficiency. However, it may be an example in which a sectional surface of one pipe is partitioned into two passages each having a half-cylinder sectional shape, and one passage is set as the hot water supply flow path and the other passage is set as the oil introduction flow path. Also, the hot water supply pipe and the oil introduction pipe may be connected with each other in parallel to have a contact surface, or a structure in which a heat insulating material covers the outer circumference of bundled two pipes is also possible. That is, it is not limited to the structure of Embodiment 1 as long as the hot water supply flow path and the heat medium introduction flow path are arranged along each other so as to be capable of the heat exchange therebetween.
The present invention claims priority based on Japanese Patent Application No. 2006-313801 filed on November 21, 2006, and the content of the same application including the specification, drawings, and scope of claims is incorporated herein by reference in its entirety.

### INDUSTRIAL APPLICABILITY

In Embodiment 1, the example in which the heat storage system for a vehicle is employed in the hybrid vehicle has been shown. However, the heat storage system for a vehicle of the present invention may also be employed in an engine car mounted with a gasoline engine or a diesel engine. That is, it may be employed in a vehicle including a heat accumulator in an engine coolant circulation circuit connecting an engine and a heater core.

## Claims

1. A heat storage system for a vehicle comprising a heat accumulator, in which engine coolant is stored and allowed to flow, in an engine coolant circulation circuit connecting an engine and a heater core of an air conditioning unit, the system **characterized in that**
the heat accumulator is provided with a heat medium storage layer, in which a heat medium different from the engine coolant is stored and allowed to flow, between a hot water storage layer and a heat insulation layer.

2. The heat storage system for a vehicle according to claim 1, **characterized in that**
the heat insulation layer is a vacuum heat-insulation layer, and
the heat medium storage layer is an oil storage layer in which transmission oil used in a transmission is stored and allowed to flow, the transmission oil serving as the heat medium different from the engine coolant.

3. The heat storage system for a vehicle according to claim 2, **characterized in that**
the heat accumulator is a stacked-type heat accumulator in which the hot water storage layer, the oil storage layer, and the vacuum heat-insulation layer are formed by stacking a plurality of tank components and closing opening portions of the stacked tank components with an inlet-side lid plate and an outlet-side lid plate.

4. The heat storage system for a vehicle according to claim 3, **characterized in that**
the stacked-type heat accumulator has an indent formed in a wall partitioning the hot water storage layer and the oil storage layer by stacking the tank components, the indent being perpendicular to a flow of the engine coolant from an inlet to an outlet.

5. The heat storage system for a vehicle according to any one of claims 1 to 4, **characterized in that**
a heat medium introduction flow path and a heat medium return flow path are connected to the heat medium storage layer of the heat accumulator, the paths introducing and returning the heat medium different from the engine coolant, and,
the heat medium introduction flow path is arranged along a hot water supply flow path in the engine coolant circulation circuit so as to be capable of heat exchange therebetween, the hot water supply flow path supplying the engine coolant of the hot water storage layer of the heat accumulator to an inlet of the heater core, the heat medium introduction flow path having a flow in an opposite direction to that of the engine coolant.

6. The heat storage system for a vehicle according to claim 5 and the heat storage system for a vehicle, **characterized in that**
the hot water supply flow path and the heat medium introduction flow path are configured by a double pipe formed of an inner pipe and an outer pipe, and, in the double pipe, a flow path encompassed by the inner pipe is the heat medium introduction flow path and a flow path encompassed by the inner pipe and the outer pipe is the hot water supply flow path.

7. The heat storage system for a vehicle according to any one of claims 1 to 6, **characterized in that**
a hot water inlet valve and a hot water outlet valve are respectively provided to a hot water inlet pipe and a hot water outlet pipe communicating with the hot water storage layer of the heat accumulator,
a heat medium inlet valve and a heat medium outlet valve are respectively provided to a heat medium inlet pipe and a heat medium outlet pipe communicating with the heat medium storage layer of the heat accumulator, and
**characterized by** further comprising a valve controller which opens the heat medium inlet valve and the heat medium outlet valve during heat storage regardless of whether or not a heater is in use, which closes the hot water inlet valve, the hot water outlet valve, the heat medium inlet valve, and the heat medium outlet valve in a heat storage state when the engine is stopped, and which opens the hot water inlet valve, the hot water outlet valve, the heat medium inlet valve, and the heat medium outlet valve when the heater is in use immediately after a start of the engine.
